Europäisches Patentamt

European Patent Office

Office européen des brevets

(19)

(11) Veröffentlichungsnummer : **0 045 011**
**B1**

(12) **EUROPÄISCHE PATENTSCHRIFT**

(45) Veröffentlichungstag der Patentschrift :
**07.11.84**

(21) Anmeldenummer : **81105585.4**

(22) Anmeldetag : **16.07.81**

(51) Int. Cl.³ : **G 01 L 19/06, G 01 L 7/06**

(54) **Hydraulisches Filter zur Ausfilterung von langsamen Druckschwankungen.**

(30) Priorität : **29.07.80 DE 3028657**

(43) Veröffentlichungstag der Anmeldung :
**03.02.82 Patentblatt 82/05**

(45) Bekanntmachung des Hinweises auf die Patenterteilung : **07.11.84 Patentblatt 84/45**

(84) Benannte Vertragsstaaten :
**BE DE FR GB IT NL**

(56) Entgegenhaltungen :
**DE-A- 2 211 126**
**DE-A- 2 547 829**
**DE-A- 2 829 419**
**DE-B- 1 004 394**
**DE-C- 1 028 360**
**US-A- 2 984 109**

(73) Patentinhaber : **Bodenseewerk Gerätetechnik GmbH**
**Alte Nussdorfer Strasse 15 Postfach 1120**
**D-7770 Überlingen/Bodensee (DE)**

(72) Erfinder : **Vachek, Josef, Dipl.-Ing.**
**Fichtenweg 3**
**D-7770 Überlingen-Hödingen (DE)**

(74) Vertreter : **Weisse, Jürgen, Dipl.-Phys. et al**
**Bökenbusch 41 Postfach 11 03 86**
**D-5620 Velbert 11-Langenberg (DE)**

## Beschreibung

Die Erfindung betrifft ein hydraulisches Filter zur Ausfilterung von langsamen Druckschwankungen in einer Flüssigkeit, enthaltend

a) ein erstes hydraulisches, Tiefpaßcharakter aufweisendes Filterglied, das aus einem ersten hydraulischen Speicherelement, dessen Volumen gegen eine elastische Rückstellkraft veränderbar ist, und aus einer ersten Drossel, über welche das hydraulische Speicherelement mit der den Druckschwankungen unterworfenen Flüssigkeit in Verbindung steht, besteht,

b) ein zweites hydraulisches, Tiefpaßcharakter aufweisendes Filterglied, das aus einem zweiten hydraulischen Speicherelement, dessen Volumen gegen eine elastische Rückstellkraft veränderbar ist, und aus einer zweiten Drossel besteht, und

c) einen auf eine Druckdifferenz ansprechenden Differenzdruckgeber, der auf einer Seite von dem Druck des ersten hydraulischen Speicherelements und auf der anderen Seite von dem Druck des zweiten hydraulischen Speicherelements beaufschlagt ist.

Ein solches Filter ist bekannt durch die DE-B-1 004 394. Diese hat einen Meßwertumformer für die Differenzdruckmessung in Flüssigkeiten zum Gegenstand. Dieser Meßwertumformer enthält einen Differenzdruckgeber mit einem Gehäuse, das durch eine Membran in zwei Membrankammern unterteilt ist. Die Membrankammern sind über Signalleitungen mit einer Durchflußleitung stromauf bzw. stromab von einer in der Durchflußleitung angeordneten Meßdrossel verbunden. Der Hub der Membran gegen irgendeine Rückstellkraft wird dann in ein Meßsignal umgesetzt. Um Druckschwankungen und damit Schwankungen des Meßsignals zu vermeiden, die sich durch die Länge der Signalleitungen und dadurch auftretende selbsterregte Schwingungen des Systems ergeben können, sind mit den Signalleitungen Dämpfungsmittel verbunden. Diese Dämpfungsmittel bestehen aus einem Raum, in welchem ein Balg angeordnet ist, wobei der Raum über eine Drossel mit der stromaufwärtigen und das Innere des Balgs über eine Drossel mit der stromabwärtigen Signalleitung verbunden ist. Dadurch soll das Auftreten von Schwingungen in den Signalleitungen unterbunden werden. Bei einer anderen in der DE-B-1 004 394 erwähnten Anordnung ist an Stelle der oben beschriebenen Dämpfungsmittel in jeder Signalleitung ein besonderer Balg angeordnet. Es ist durch die DE-B-1 004 394 auch bekannt, in den Impulsleitungen zwischen der Meßleitung und den Dämpfungsmitteln Drosseln anzuordnen.

Durch die DE-A-2 547 829 ist eine Einrichtung zum Dämpfen von Druckstößen bekannt, die ein hydraulisches Speicherelement mit einem gegen eine Rückstellkraft veränderbaren Volumen und eine Drossel aufweist, über welche das hydraulische Speicherelement mit der den Druckstößen unterworfenen Flüssigkeit in Verbindung steht. Die Drossel wird dabei von zwei gleichachsig angeordneten Sintermetallhülsen gebildet, die druckmitteldurchlässig sind und zwischen deren Stirnflächen eine mit einer Drosselbohrung versehene Scheibe angeordnet ist. Die Sintermetallhülsen sind von einer schlauchförmigen Membran umgeben, die gegen die Wirkung einer Druckgasfüllung in einer Ringkammer aufblähbar ist. Diese Membran begrenzt das veränderbare Volumen. Das Druckmittel wirkt statisch über die Bohrung der ersten Sintermetallhülse, durch das druckmitteldurchlässige Material dieser Sintermetallhülse, die Drosselbohrung in der Scheibe und das Material der zweiten Sintermetallhülse sowie über deren Bohrung auf ein Manometer. Druckstöße, die über den Druck der Druckgasfüllung ansteigen, bewirken ein Aufblähen der Membran und werden dadurch gedämpft.

Eine ähnliche Anordnung zeigt die US-A-2 984 109. Statt einer von einem Druckgas beaufschlagten Membran ist dort ein Kolben vorgesehen, der eine mit einem Manometer verbundene Druckkammer abschließt und unter dem Einfluß einer vorgespannten Feder an einem Anschlag anliegt. Bei einem Druckstoß, der die Kraft der Feder überwindet, weicht der Kolben aus. Dadurch wird der an dem Manometer wirksam werdende Druck begrenzt.

Der Erfindung liegt die Aufgabe zugrunde, ein bestimmtes mittleres Frequenzband von Druckschwankungen auszuwerten, also Frequenzen sowohl oberhalb als auch unterhalb eines interessierenden Bereiches zu unterdrücken.

Erfindungsgemäß wird diese Aufgabe bei einem Filter der eingangs genannten Art dadurch gelöst, daß

d) das zweite hydraulische Speicherelement über die zweite Drossel mit dem ersten hydraulischen Speicherelement verbunden ist,

e) die Grenzfrequenz des ersten hydraulischen Filtergliedes höher ist als die des zweiten hydraulischen Filtergliedes.

Es wird unten noch gezeigt werden, daß eine solche Anordnung die Eigenschaften eines Bandpaßfilters besitzt.

Bei der vorerwähnten DE-B-1 004 394 (in der zwei hydraulische Speicherelemente enthaltenden Version) ist jedes Speicherelement nur mit der zugehörigen Signalleitung verbunden. Es ist dort nichts über die Grenzfrequenzen der Filterglieder gesagt. Dem Sinn der dort vorliegenden Aufgabe würde es aber entsprechen, daß die Filterglieder gleich sind. Zur Lösung der oben angegebenen Aufgabe ist die bekannte Anordnung daher weder bestimmt noch geeignet.

Ausgestaltungen der Erfindung sind Gegenstand der Ansprüche 2 bis 5.

Die Erfindung ist nachstehend an einem Ausführungsbeispiel unter Bezugnahme auf die zugehörigen Zeichnungen näher erläutert.

Figur 1 zeigt schematisch ein hydraulisches Filter mit Bandpaßeigenschaften.

Figur 2 ist eine schematische Darstellung eines einzelnen Filtergliedes zur Veranschaulichung, wie die Grenzfrequenzen bzw. Zeitkonstanten der Filterglieder den Erfordernissen entsprechend gewählt werden können.

Figur 3 zeigt im Längsschnitt eine weitere Ausführungsform eines Filtergliedes mit Sintermaterial und federbelastetem Kolben.

Figur 4 zeigt eine Ausführungsform, bei welcher Vorkehrungen getroffen sind, um eine Verschmutzung der Kapillare zu verhindern.

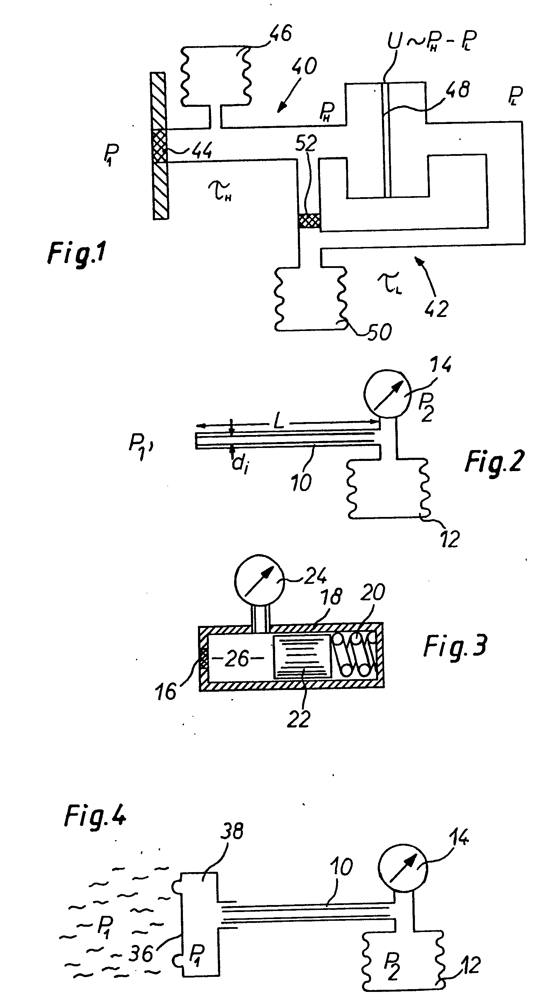

Bei dem hydraulischen Filter gemäß Fig. 1 werden zwei « Tiefpässe » aufgebaut, nämlich ein Tiefpaß 40 mit einer relativ hohen Grenzfrequenz und einer Zeitkonstante $\tau_H$ und ein Tiefpaß 42 mit einer relativ niedrigen. Grenzfrequenz und einer Zeitkonstante $\tau_L$. Der Tiefpaß 40 besteht aus einer Drossel 44 und einem hydraulischen Speicherelement 46. Der Druck des hydraulischen Speicherelements 46 beaufschlagt eine Seite des Differenzdruckgebers 48. Der Tiefpaß 42 wird von einem hydraulischen Speicherelement 50 gebildet, welches über eine Drossel 52 mit dem hydraulischen Speicherelement 46 des Tiefpasses 40 verbunden ist. Die Drosseln 44 und 52 sind in Fig. 1 als druckmitteldurchlässige Sinterscheiben dargestellt. Der Druck des hydraulischen Speicherelements 46 werde mit $P_H$, der Druck des hydraulischen Speicherelements 50 werde mit $P_L$ bezeichnet und der Druck am Eingang des Filters sei $P_1$. Bezeichnet s den Laplaceoperator, so ist

$$P_H = P_1 \frac{1}{1 + \tau_H \cdot s}$$

$$P_L = P_H \frac{1}{1 + \tau_L s} = P_1 \cdot \frac{1}{(1 + \tau_H s)(1 + \tau_L s)} .$$

Der Differenzdruckgeber 48 liefert eine Spannung

$$U \sim P_H - P_L = P_1 \left[ \frac{1}{1 + \tau_H s} - \frac{1}{(1 + \tau_H s)(1 + \tau_L s)} \right]$$

oder

$$U \sim P_1 \frac{\tau_L s}{1 + s(\tau_H + \tau_L) + \tau_H \tau_L s^2} .$$

Dies ist die Übertragungsfunktion eines Bandpasses.

Die Funktion des Filters läßt sich auch anschaulich verstehen :

Langsame Schwankungen des Drucks $P_1$ unterhalb der unteren Grenzfrequenz des Filtergliedes 42 werden von beiden Filtergliedern 40 und 42 übertragen. An dem Differenzdruckgeber 48 tritt daher keine Druckdifferenz und damit kein Ausgangssignal auf. Wenn die Frequenz der Schwankungen unter der Grenzfrequenz des Filtergliedes 40 aber über der Grenzfrequenz des Filtergliedes 42 liegt, werden die Schwankungen zwar noch über das Filterglied 40 an dem Differenzdruckgeber 48 wirksam. Sie werden aber von dem Filterglied 42 nicht mehr übertragen, so daß an dem Differenzdruckgeber 48 keine Kompensation erfolgt. Der Differenzdruckgeber liefert ein den Schwankungen entsprechendes Ausgangssignal. Druckschwankungen höherer Frequenz oberhalb der Grenzfrequenz des Filtergliedes 40 werden von dem Filterglied 40 unterdrückt und gar nicht an dem Differenzdruckgeber wirksam.

Fig. 2 erläutert, wie die Filterglieder ausgelegt werden müssen, um die gewünschten Grenzfrequenzen zu erhalten. In Fig. 2 ist als Drossel ein Kapillarrohr 10 mit einem Innendurchmesser $D_i$ und einer Länge L vorgesehen. Das Kapillarrohr 10 verbindet den Raum, in welchem sich die den Druckschwankungen unterworfene Flüssigkeit mit dem Eingangsdruck $P_1$, befindet, mit einem von einem elastischen Balg 12 gebildeten hydraulischen Speicherelement. Der in dem Balg 12 herrschende Druck $P_2$ wird durch ein Druckmeßgerät 14 gemessen.

Bei laminarer Strömung durch das Kapillarrohr 10 mit dem Innendurchmesser $d_i$ und der Länge L ist die Druckdifferenz

$$P_{1'} - P_2 = \frac{32 \cdot \eta \cdot L \cdot \bar{v}}{d_i^2} \qquad (1)$$

wobei $\eta$ die dynamische Zähigkeit und $\bar{v}$ die Durchschnittsgeschwindigkeit bedeutet. Da während des Zeitintervalls dt aufgrund des Druckgefälles ein Flüssigkeitselement

$$dV = \frac{\pi \cdot d_i^2}{4} \cdot \bar{v} \cdot dt = \frac{\pi \cdot d_i^4 (P_{1'} - P_2) \, dt}{128 \cdot \eta \cdot L} \qquad (2)$$

in den Balg 12 gelangt, ergibt sich gemäß dem Hagen-Poiseullischen Gesetz eine Druckänderung im Balg 12 von

$$dP_2 = \frac{dV}{Cv_p} = \frac{P_1 \cdot - P_2}{\tau} \cdot dt \tag{3}$$

mit $Cv_p$ als der spezifischen Volumenänderung (aufgrund der Druckänderung) des Balges 12, wenn man

$$\frac{128 \cdot \eta \cdot L \cdot C_{v_p}}{\pi d_i^4} = \tau \tag{4}$$

setzt.

Formt man die Gleichung (3) etwas um, so erhält man die Gleichung

$$\tau \cdot \frac{dP_2}{dt} + P_2 = P_1. \tag{5}$$

woraus hervorgeht, daß es sich bei der vorliegenden Anordnung um ein Filterglied 1. Ordnung handelt. Die Zeitkonstante $\tau$ dieses Systems ergibt sich aus Gleichung (4).

Man erkennt aus Gleichung (4), daß die Zeitkonstante $\tau$ sehr stark vom Innendurchmesser der Kapillare anhängt.

Nach Vorgabe der erforderlichen Zeitkonstante, die von der geforderten Dämpfung und der tiefsten auszufilternden Frequenz abhängt, und nach Auswahl eines geeigneten Balgs können die Abmessungen des Kapillarrohres 10 nach Gleichung (4) berechnet und kann ein geeignetes Kapillarrohr ausgewählt werden. Das Filter ist verlustfrei. Es schützt das Druckmeßgerät vor zu hohen, unzulässigen Druckspitzen.

Die Figuren 3 und 4 zeigen weitere Ausführungsmöglichkeiten der Filterglieder.

Fig. 3 zeigt eine Ausführungsform, bei welcher die Drossel von einem Sintermaterial 16 und der hydraulische Speicher von einem Zylinder 18 gebildet ist, in welchem ein durch eine Feder 20 belasteter Kolben 22 beweglich ist. An die zwischen Sintermaterial 16 und Kolben 22 gebildete Zylinderkammer 26 ist ein Druckmeßgerät 24 angeschlossen.

Die Anordnung von Fig. 4 ist ähnlich der von Fig. 2, mit einem Kapillarrohr 10 als Drossel, einem Balg 12 als Speicherelement und dem Druckmeßgerät 14. Hier ist jedoch die Drossel 10 einlaßseitig mit einer durch eine Membran 36 abgeschlossenen, flüssigkeitsgefüllten Kammer 38 verbunden, wobei das den Druckschwankungen unterworfene Medium an die Außenseite der Membran 36 angrenzt.

Auf diese Weise gelangt das den Druckschwankungen unterworfene Medium, z. B. Seewasser, nicht in das Kapillarrohr 10 und kann dieses nicht verstopfen. Es ist außerdem möglich, die Kammer 38, das Kapillarrohr 10 und den Balg 12 mit einer viskosen Flüssigkeit zu füllen und damit $\tau$ in Gleichung (4) zu erhöhen.

Die verschiedenen Arten von Drosseln und hydraulischen Speicherelementen können auch in anderer Weise miteinander zu Filtergliedern kombiniert werden. Die Kammer 38 und Membran 36 können auch bei einer Anordnung nach Fig. 3 vorgesehen werden.

Zwei solcher Filterglieder können — statt der Filter glieder von Fig. 1 — zur Erzeugung des Bandpaßfilters von Fig. 1 kombiniert werden.

**Ansprüche**

1. Hydraulisches Filter zur Ausfilterung von langsamen Druckschwankungen in einer Flüssigkeit, enthaltend

a) ein erstes hydraulisches, Tiefpaßcharakter aufweisendes Filterglied (40), das aus einem ersten hydraulischen Speicherelement (12, 18, 46), dessen Volumen gegen eine elastische Rückstellkraft veränderbar ist, und aus einer ersten Drossel (10, 16, 44), über welche das hydraulische Speicherelement (12, 18, 46) mit der den Druckschwankungen unterworfenen Flüssigkeit in Verbindung steht, besteht,

b) ein zweites hydraulisches, Tiefpaßcharakter aufweisendes Filterglied (42), das aus einem zweiten hydraulischen Speicherelement (12, 18, 50), dessen Volumen gegen eine elastische Rückstellkraft veränderbar ist, und aus einer zweiten Drossel (10, 16, 52) besteht, und

c) einen auf eine Druckdifferenz ansprechenden Differenzdruckgeber (48), der auf einer Seite von dem Druck des ersten hydraulischen Speicherelements (12, 18, 46) und auf der anderen Seite von dem Druck des zweiten hydraulischen Speicherelements (12, 18, 50) beaufschlagt ist, dadurch gekennzeichnet, daß

d) das zweite hydraulische Speicherelement (12, 18, 50) über die zweite Drossel (10, 16, 52) mit dem ersten hydraulischen Speicherelement (12, 18, 46) verbunden ist,

e) die Grenzfrequenz des ersten hydraulischen Filtergliedes (40) höher ist als die des zweiten hydraulischen Filtergliedes (42).

2. Hydraulisches Filter nach Anspruch 1. dadurch gekennzeichnet, daß die Speicherelemente

4

Zylinder (18) sind, in welchen jeweils ein federbelasteter Kolben (22) geführt ist.

3. Hydraulisches Filter nach Anspruch 1, dadurch gekennzeichnet, daß die Drosseln von jeweils einem Kapillarrohr (10) gebildet sind.

4. Hydraulisches Filter nach Anspruch 1, dadurch gekennzeichnet, daß die Drosseln von einem Körper aus druckmitteldurchlässigem Sintermaterial (16) gebildet sind.

5. Hydraulisches Filter nach einem der Ansprüche 1 bis 6, dadurch gekennzeichnet, daß die erste Drossel (10) einlaßseitig mit einer durch eine Membran (36) abgeschlossenen, flüssigkeitsgefüllten Kammer (38) verbunden ist, wobei das den Druckschwankungen unterworfene Medium an die Außenseite der Membran (36) angrenzt.

## Claims

1. Hydraulic filter for eliminating slow pressure fluctuations in a liquid, comprising

a) a first hydraulic filter element (40) having low pass character and consisting of a first hydraulic accumulator element (12, 18, 46), the volume of which is variable against an elastic restoring force, and of a first restrictor (10, 16, 44), through which the hydraulic accumulator element (12, 18, 46) communicates with the liquid subjected to the pressure fluctuations,

b) a second hydraulic filter element (42) having low pass character and consisting of a second hydraulic accumulator element (12, 18, 50) the volume of which is variable against an elastic restoring force, and of a second restrictor (10, 16, 52), and

c) a differential pressure transmitter (48) responding to a pressure differential, said differential pressure transmitter being exposed on one side to the pressure of the first hydraulic accumulator element (12, 18, 46) and on the other side to the pressure of the second hydraulic accumulator element (12, 18, 50),

characterized in that

d) the second hydraulic accumulator element (12, 18, 50) is connected with the first hydraulic accumulator element (12, 18, 46) through the second restrictor (10, 16, 52),

e) the limit frequency of the first hydaulic filter element (40) is higher than that of the second hydraulic filter element (42).

2. Hydraulic filter as claimed in claim 1, characterized in that the accumulator elements are cylinders (18) in each of which a spring loaded pistion (22) is guided.

3. Hydraulic filter as claimed in claim 1, characterized in that the restrictors are capillary tubes (10).

4. Hydraulic filter as claimed in claim 1, characterized in that the restrictors are formed of bodies of fluid-permeable sinter material (16).

5. Hydraulic filter as claimed in anyone of the claims 1 to 6, characterized in that the first restrictor (10) on its inlet side communicated with a liquid-filled chamber (38) closed by a diaphragm (36), the medium exposed to the pressure fluctuations being adjacent the outside of the diaphragm (36).

## Revendications

1. Filtre hydraulique pour l'élimination par filtrage de fluctuations de pression lentes dans un liquide, contenant

a) un premier élément de filtre hydraulique (40) présentant le caractère de passe-bas, et consistant d'un premier élément accumulateur hydraulique (12, 18, 46) dont le volume est variable contre une force de rappel élastique, et d'un premier étrangleur (10, 16, 44) par l'intermédiaire duquel l'élément accumulateur hydraulique (12, 18, 46) est relié au liquide soumis aux fluctuations de pression,

b) un deuxième élément de filtre hydraulique (42) présentant le caractère de passe-bas, et consistant d'un deuxième élément accumulateur hydraulique (12, 18, 50), dont le volume est variable contre une force de rappel élastique, et d'un deuxième étrangleur (10, 16, 52) et

c) un capteur de différence de pression (48) répondant à une différence de pression et qui est exposé, sur un côté, à la pression du premier élément accumulateur hydraulique (12, 18, 46), et sur l'autre côté, à la pression du deuxième élément accumulateur hydraulique (12, 18, 50), caractérisé par le fait que

d) le deuxième élément accumulateur hydraulique (12, 18, 50) est relié par l'intermédiaire de l'étrangleur (10, 16, 52) au premier élément accumulateur hydraulique (12, 18, 46),

e) la fréquence seuil du premier élément de filtre hydraulique (40) est supérieure à celle du deuxième élément de filtre hydraulique (42).

2. Filtre hydraulique selon la revendication 1, caractérisé par le fait que les éléments accumulateurs sont des cylindres (18) dans lesquels est guidé à chaque fois un piston (22) chargé par ressort.

3. Filtre hydraulique selon la revendication 1, caractérisé par le fait que les étrangleurs sont formés chacun par un tube capillaire (10).

4. Filtre hydraulique selon la revendication 1, caractérisé par le fait que les étrangleurs sont formés par un corps de matière frittée (16) perméable pour fluide.

5. Filtre hydraulique selon l'une quelconque des revendications 1 à 6, caractérisé par le fait que le premier étrangleur (10) est relié du côté de l'entrée à une chambre (38) remplie de liquide et fermée par une membrane (36), le milieu soumis aux fluctuations de pression avoisinant le côté extérieur de la membrane (36).

Fig.1

Fig.2

Fig.3

Fig.4